# EUROPÄISCHE PATENTSCHRIFT

(11) **EP 0 521 446 B1**
(45) Veröffentlichungstag und Bekanntmachung des Hinweises auf die Patenterteilung: **12.04.1995**
(21) Anmeldenummer: 92111028.4
(22) Anmeldetag: 30.06.1992
(51) Int. Cl.: F16F 7/10, F16F 15/12

(54) **Tilger**
Damper
Amortisseur

(30) Priorität: 01.07.1991 DE 4121746
(43) Veröffentlichungstag der Anmeldung: 07.01.1993
(73) Patentinhaber: WOCO Franz-Josef Wolf & Co., D-63628 Bad Soden-Salmünster (DE)
(72) Erfinder: Wolf, Franz Josef, W-6483 Bad Soden-Salmünster (DE); Thesenvitz, Manfred, Dr., W-6490 Schlüchtern (DE); Mohr, Martin, W-6486 Brachttal-Udenhain (DE); Schneider, Joachim, W-6483 Bad Soden-Salmünster (DE)
(74) Vertreter: Jaeger, Klaus, Dr.

(56) Entgegenhaltungen:
- EP-A- 0 218 774
- EP-A- 0 291 942
- DE-A- 3 902 768
- GB-A- 2 180 034

## Beschreibung

Die Erfindung betrifft einen Wellentilger, der entsprechend dem Oberbegriff des Patentanspruchs 1 in üblicher Weise aus drei zueinander konzentrischen Ringen aufgebaut ist, nämlich einem äußeren Schwingmassering, einem inneren Nabenring und einem diese beiden Rinde elastisch miteinander verbindenen und gegeneinander fixierenden Elastomerring. Der Elastomerring ist in an sich üblicher Weise segmentiert, das heißt, keine durchgehende Ringscheibe, sondern ein durch durchgehende Ausnehmungen und Durchbrechungen unterteilter Ringkörper, der üblicherweise aus einem Elastomer besteht.

Wellentilger dieser Art sind in großer Vielzahl bekannt und werden insbesondere im Kraftfahrzeugbau eingesetzt, wo sie der Tilgung vor allem akustischer Schwingungen dienen.

Aus der EP 0 218 774 A1 ist ein Drehschwingungsdämpfer entsprechend dem Oberbegriff des Anspruchs 1 mit Nabenring und Schwungring bekannt, die durch mindestens ein erstes Federelement verbunden und relativ verdrehbar sind. In einem radialen Abstand zwischen Nabenring und Schwungring ist wenigstens ein zweites Federelement nur innenseitig festgelegt, aber außenseitig ohne Bindung, das durch die sich bei einer gewünschten Drehzahl ergebende Fliehkraft an die außenseitig begrenzende Fläche anpreßbar ist, wodurch eine Parallelschaltung der beiden Federelemente erzielt wird.

Die erforderliche Anpassung und Feinabstimmung der Wellentilger für die speziellen Anwendungen stellt heute, von wenigen Problemfällen abgesehen, angesichts der Verfügbarkeit rechnergestützter Entwurfs- und Konstruktionsverfahren keine unlösbare Aufgabe mehr dar.

Zu den genannten Problemfällen gehört jedoch nach wie vor eine effektive Tilgung von Schwingungen, die im akustischen Bereich an den Gelenkwellen von Kraftfahrzeugen mit Vorderradantrieb auftreten. Insbesondere für diesen Anwendungsbereich fehlen nicht nur Tilger mit ausreichender Dämpfungs- und Tilgungsfunktion, sondern auch Tilger mit ausreichender Standzeit. Dabei ist eine Verbesserung der Haltbarkeit der Tilger durchaus eine Aufgabe, die nach wie vor für Wellentilger aller Einsatzbereiche von hoher Priorität ist.

Ausgehend von diesem Stand der Technik liegt der Erfindung die Aufgabe zugrunde, einen Wellentilger, insbesondere Tilger für die Gelenkwellen von Kraftfahrzeugen speziell Kraftfahrzeugen mit Vorderradantrieb, zu schaffen, der eine sowohl hinsichtlich der Frequenzbreite als auch des Wirkungsgrades verbesserte Tilgerwirkung, insbesondere aber eine deutliche Verbesserung der Haltbarkeit unter Betriebsbedingungen, das heißt der Standzeit, zeigt.

Zur Lösung dieser Aufgabe schafft die Erfindung einen Wellentilger, der die im kennzeichnenden Teil des Anspruchs 1 genannten Merkmale aufweist.

Ausgestaltungen der Erfindung sind Gegenstand der Unteransprüche.

Im Hinblick auf das Tilgungsverhalten ist zunächst die Kontur der sich axial durch den Tilger hindurch erstreckenden Elastomerstege von Bedeutung, die den Schwingmassering axial und radial fest aber elastisch und koppelnd miteinander verbinden. Die Außenkontur der Verbindungsstege, die in axialer Sicht zumindest im wesentlichen die Form eines radial ausgerichteten und sich tangential einschnürenden "X" hat, bewirkt dabei, daß der so aufgebaute tilgende Schwinger nicht nur rotatorische Freiheitsgrade, sondern ausgeglichen verstärkt auch radialtranslatorische und axial translatorische und nickende bzw. kippende Schwingungsfreiheitsgrade aufweist. Dabei kann eine Abstimmung der einzelnen Komponenten in einfacher Weise nicht nur über die Einstellung des Elastomers, sondern auch über die geometrische Konfiguration der Verbindungsstege und deren Anzahl erreicht werden. Dabei sind die Verbindungsstege, die den Nabenring mit dem Schwingmassering koppeln, üblicherweise im gleichen Winkelabstand voneinander verteilt. Vorzugsweise sind drei bis sechs solcher Verbindungsstege, insbesondere vier, vorgesehen. Dabei ist der in Umfangsrichtung des Tilgers gemessene Abstand zweier benachbarter Verbindungsstege vorzugswseise gleich bis nicht größer als doppelt so groß wie die in gleicher Richtung gemessene mittlere Breite der Verbindungsstege selbst.

Eine wesentliche Verbesserung der Standzeit eines solchen Schwingers, aber auch ein verbessertes Dämpfungsverhalten, wird gemäß der Erfindung dadurch erzielt, daß radial außen stoffschlüssig und/oder formschlüssig als Teile des Elastomerringes fest mit dem Schwingmassering verbundene, sich axial erstreckende Pufferstege zwischen jeweils zwei benachbarten Verbindungsstegen konfigurativ eingepasst sind. Dies bedeutet, daß die Außenkontur dieser Pufferstege komplementär zur Innenkontur der zwischen den Verbindungsstegen ausgebildeten Durchbrüche ausgebildet ist, wobei diese Pufferstege so bemessen sind, daß sie im Ruhezustand des Tilgers zwischen zwei benachbarten Verbindungsstegen und dem in diesem Bereich freiliegenden Mantel des Nabenringes einen durchgehenden Trennfugenspalt freilassen.

In der Regel wird es ausreichen, wenn dieser Trennfugenspalt über seine gesamte Länge eine konstante Breite aufweist, das heißt, daß sich die den Trennfugenspalt bildenden Trennflächen zwischen den Verbindungsstegen und den Pufferstegen einerseits und dem Puffersteg und der diesem gegenüberliegenden Mantelflächenabschnitt des Nabenringes exakt flächenkomplementär zueinander ausgebildet und über die gesamte Länge des Trennfugenspalts jeweils den gleichen Abstand voneinander haben. Nach einer Ausgestaltung der Erfindung, die es bei hoher dynamischer Belastung des Tilgers ermöglicht, die Standzeit unter kontinuierlicher dynamischer Belastung doch spürbar zu verlängern, ist jedoch vorgesehen, daß die den Trennfugenspalt begrenzenden Trennflächen im radial äußeren Bereich zwischen den Verbindungsstegen und den Pufferstegen sowie zwischen den Pufferstegen und den Nabenringmantelflächen konstanten Abstand voneinander haben, während die den Trennfugenspalt bildenden Trennflächen im radial inneren Bereich des zwischen den Verbindungsstegen und den Pufferstegen gebildeten Abschnitts des Trennfugenspaltes derart geringfügig gegeneinander geneigt verlaufen, daß sich der Trennfugenspalt nach radial innen hin, also von der stärksten Einschnürung des Außenprofils des Verbindungsstegs in Richtung auf die Nabenringmantelfläche zu, in Richtung nach radial innen hin verbreitert. Die Breite, mit der sich dieser Trennspaltabschnitt dann schließlich über der Mantelfläche des Nabenringes öffnet, ist dann vorzugsweise gleich der dann anschließenden konstanten Breite des Trennfugenspalts zwischen dem Abschnitt des Nabenringmantels und der diesem gegenüberliegenden radial inneren Trennfläche des Pufferstegs. Dabei ist der Grad der Öffnung, das heißt der Grad der Neigung der beiden Trennflächen zwischen jeweils einem Verbindungssteg und einem Puffersteg vergleichsweise gering, so daß eine nur geringfügige Aufweitung des Trennfugenspalts in Richtung nach radial einwärts auf den Nabenring hin erfolgt. Vorzugsweise beträgt die Endöffnung dieses Trennfugenspaltabschnitts unmittelbar über dem Nabenring das ungefähr 1,1fache bis 2,5fache der Ursprungsbreite dieses Trennfugenabschnitts im Bereich der stärksten Einschnürung des Außenprofils des Verbindungssteges im unverformten Zustand. Durch diese schwache Aufweitung der Trennfugenfläche wird einerseits das Schwingverhalten des Tilgers praktisch nicht beeinflußt, wird aber in fast allen Hauptschwingmodi des Tilgers einschließlich axialer Kippschwingungen erreicht, daß die bei großen und übergroßen Amplituden als Anschlagflächen wirkenden Trennflächen in diesem Abschnitt des Trennfugenspalts zwischen Verbindungssteg und Puffersteg nicht flächig unter vergleichweiser starker Verformung des Elastomers beider Stege aufeinanderschlagen, sondern daß sich beginnend von einer anfänglichen Kantenanlage zwischen den Trennflächen der beiden Stege gleichsam eine abrollende Anschlagbewegung oder Anlagebewegung entwickelt, die dann im Ergebnis auch zu der für sehr große Amplituden benötigten flächigen Anlage des Verbindungsstegs und des Pufferstegs führt. Die dadurch erreichte Glättung des zeitlichen Verlaufs der Verformungsspannungsverteilung im Elastomerring führt dabei neben einer Verbesserung der akustischen Tilgung vor allem zu einer ganz wesentlichen Verlängerung der Betriebsstandzeit des Tilgers. Dabei wird ein beson ders gutes Zusammenspiel zwischen den Pufferstegen und den Verbindungsstegen nach einer weiteren Ausgestaltung der Erfindung dann erzielt, wenn die Verbindungsstege axial kürzer als die Pufferstege sind, wobei die Verbindungsstege jeweils axial mittig zu den Pufferstegen angeordnet sind, so daß also, mit anderen Worten, die Pufferstege zu beiden axialen Seiten des Tilgers über die axialen Enden bzw. Seitenflächen der Verbindungsstege vorstehen. Um welchen Betrag die Verbindungsstege kürzer als die Pufferstege auszubilden sind, ist eine Frage der vom Fachmann für jeden Einzelfall der Anwendung vorzunehmenden Abstimmung. Üblicherweise werden die Verbindungsstege auf jeder Seite jedoch nicht wesentlich mehr als ungefähr 10 bis 15 % der Gesamtlänge der Pufferstege zurückspringen.

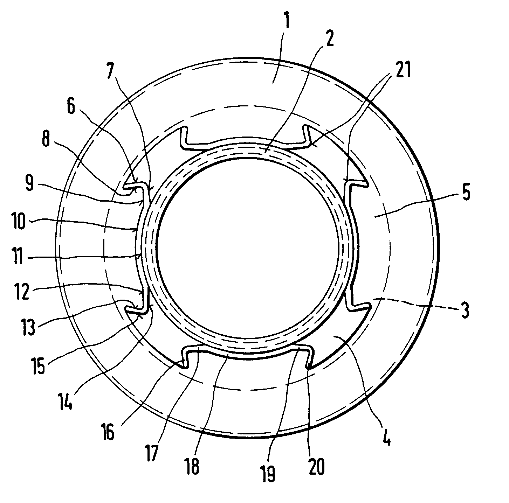

Die Erfindung ist im folgenden anhand eines Ausführungsbeispiels in Verbindung mit der Zeichnung näher erläutert. Dabei zeigt die einzige Figur, nämlich die
- Fig. 1: in Seitensicht einen Gelenkwellentilger für Kraftfahrzeuge zur Tilgung akustischer Schwingungen, die an den Gelenkwellen auftreten bzw. durch diese hindurch weitergeleitet werden.

Der in axialer Richtung in Seitensicht in der Fig. 1 gezeigte Gelenkwellentilger hat bei einem Durchmesser von rund 90 mm eine axiale Länge von rund 30 mm und besteht aus einem äußeren Schwingmassering 1, einem inneren Nabenring 2 und konzentrisch zwischen diesen beiden Ringen aus einem Elastomerring 3. Der Elastomerring 3 ist segmentiert ausgebildet und besteht aus Verbindungsstegen 4 und Pufferstegen 5. Wo immer möglich, werden die Verbindungsstege 4 und die Pufferstege 5 aus fertigungstechnischen Gründen und aus Kostengründen vorzugsweise aus ein und demselben Elastomerwerkstoff bestehen. Wo dies jedoch zu Abstimmungszwecken wünschenswert oder erforderlich ist, können jedoch für die Verbindungsstege und die Pufferstege auch unterschiedliche Werkstoffe oder chemisch gleiche Elastomere in unterschiedlicher Einstellung eingesetzt werden. In dem hier erläuterten Ausführungsbeispiel bestehen die Ver bindungsstege 4 und die Pufferstege 5, die gemeinsam den segmentierten Elastomerring zwischen den Nabenring und dem Schwingmassering bilden, aus ein und demselben Werkstoff und sind in ein und demselben Formgebungstakt hergestellt worden.

Die vier Verbindungsstege 4, die jeweils einen Abstand von 90° voneinander aufweisen, weisen in der in Fig. 1 gezeigten axialen Seitensicht eine Außenkontur auf, die zumindest angenähert die Form eines radial ausgerichteten und tangential eingeschnürten "X" hat. Alternativ wäre dieses Stegprofil auch als "sanduhrartig" zu beschreiben.

Jeder der vier Verbindungsstege 4 ist radial innen fest mit der Mantelfläche des Nabenringes 2 verbunden und geht radial außen nahtlos und integral in den Elastomerring 3 über. Jeder der vier Verbindungsstege 4 ist auf jeder seiner beiden axialen Seiten um jeweils 10 % kürzer als die Pufferstege 5. Der Elastomerring 3 ist in sich geschlossen umlaufend fest mit der zylindrischen Innenwand des Schwingmasseringes 1 verbunden, so daß also der Nabenring 2 und der Schwingmassering 1 durch die elastischen Verbindungsstege 4 des segmentierten Elastomerringes 3 axial, radial und tangential elastisch unter Wahrung praktisch aller Schwingungsfreiheitsgrade gegeneinander fixiert, so daß auf diese Weise ein funktionswesentlich aus dem Schwingmassering und den Verbindungsstegen bestehender Tilgerschwinger erhalten wird.

Durch die Art der Anordnung und die Ausbildung bzw. Konturierung der Verbindungsstegprofile wird ein hochwirksamer multimodaler Schwinger und Tilger erhalten.

Durch die zentrale Einschnürung des Verbindungsstegprofils muß zunächst jedoch in Kauf genommen werden, daß ein lediglich aus dem Schwingmassering 1, den Verbindungsstegen 4 und dem inneren Nabenring 2 bestehende Tilger beim Auftreten größerer Störamplituden, insbesondere, aber nicht nur, Torsionsstöramplituden, in den Verbindungsstegen elastisch stark bean sprucht wird. Die Verwendung eines solcherart aufgebauten Tilgers beispielsweise auf der Antriebswelle von Kraftfahrzeugen würde die erreichbare Betriebsstandzeit wahrscheinlich nicht den heute gebräuchlichen Haltbarkeitserwartungen entsprechen.

Hier Abhilfe zu schaffen ist die primäre Aufgabe der Pufferstege 5, die den Freiraum zwischen zwei benachbarten Verbindungsstegen 4 praktisch vollständig ausfüllen und zu diesem Zweck so konfiguriert sind, daß ihre Axialflächen flächenkomplementär zu den entsprechenden Axialflächen der Verbindungsstege ausgebildet und so bemessen sind, daß zwischen den einander gegenüberstehenden axialen Trennflächen 6,7,14,15 der Verbindungsstege 4,8,9,12,13 der Pufferstege 5 und schließlich der einander koaxial zylindrisch gegenüberliegenden Trennflächen 10,11 der Pufferstege 5 und der unter diesen liegenden Mantelflächenabschnitte des Nabenringes 2 ein sich axial erstreckender Trennfugenspalt gebildet wird, der aus fünf Teilabschnitten 16,17,18,19,20 besteht.

In dem hier in Fig. 1 gezeigten Ausführungsbeispiel des Wellentilgers verlaufen die zueinander exakt komplementären Trennflächen des radial außenliegenden Trennfugenabschnitts 16, nämlich die Trennflächen 6,8 des Verbindungssteges 4 bzw. des Puffersteges 6 sowie die beiden einander gegenüberliegenden Trennflächen 10,11 des mittleren Trennfugenabschnitts 18 zwischen der zylindrischen radial innenliegenden Trennfläche des Pufferstegs 5 und dem zugeordneten zylindrischen Mantelflächenabschnitt des Nabenringes 2 möglichst genau äquidistant, also raumflächenparallel zueinander, während sich die radial innenliegenden Trennfugenabschnitte 17,19 zwischen den einander gegenüberstehenden Trennflächen 7,9 bzw. 12,13 der Verbindungsstege 4 und der Pufferstege 5 von der Einschnürung 21 der Verbindungsstege 4 aus nach radial innen auf den Nabenring 2 zu geringfügig aufweiten. Während der Trennflächenabstand, also die Spaltbreite der Trennfugenspaltabschnitte 17,19 im Bereich der größten Einschnürung 21 der Verbindungsstege 4 beispielsweise den Wert 1 hat, beträgt die Spaltbreite am nabenringseitigen Ende dieser Trennfugenspaltabschnitte 17,19 beispielsweise 1,8. Dabei beträgt die Trennfugenspaltbreite der Abschnitte 16,20 des Trennfugenspalts konstant 1, während die beiden Zylinderflächen, die die Trennflächen des Trennfugenspaltabschnitts 18 bilden, einen konstanten Flächenabschnitt von 1,8 voneinander haben.

Die exakte Bemessung der Trennfugenspaltbreiten ebenso wie der Grad der Verbreiterung der Trennfugenspaltabschnitte 17,19 fällt wiederum in den Bereich der Abstimmung des Wellentilgers für den einzelnen Anwendungsfall. Sowohl durch die Profilierung als auch durch die absolute Bemessung des Abstandes und der Winkelung des Trennfugenspalts kann nicht nur die maximale Antwortamplitude auf Störamplituden, sondern auch die gesamte Charakteristik des Antwortverhaltens auf Störamplituden mit bereits wenigen Annäherungsversuchen frei eingestellt und optimiert werden. Darüber hinaus erhält der gesamte Elastomerring 3 mit den Verbindungsstegen 4 und den Pufferstegen 5 nicht zuletzt auch durch die axial zentrierende Wirkung des nut-feder-artigen komplementären Eingriffs der Axialflächen im Bereich der Einschnürungen 21 der Verbindungsstege 4 eine hochgradige Stabilisierung gegen Störschwingungen praktisch aller Modi. Dies führt insbesondere bei der dargestellten schwachen Aufweitung der Trennfugenspaltbreiten in den Abschnitten 17,19 dazu, daß auch bei größeren Anregungsamplituden und Störanregungen die Antwortamplitude des Tilgers erhalten bleibt. Mit anderen Worten, die Abstimmung des in Fig. 1 gezeigten Wellentilgers bezüglich des Arbeitsbereiches kann fast unabhängig von einer Optimierung der Aufnahme von Störanregungen erfolgen.

## Patentansprüche

1. Wellentilger, bestehend aus drei zueinander konzentrischen Ringen, nämlich einem äußeren Schwingmassering (1), einem inneren Nabenring (2) und einem mittleren segmentierten Elastomerring (3), der den Schwingmassering und den Nabenring axial, radial und tangential elastisch gegeneinander fixierend über axial verlaufende Verbindungsstege (4) miteinander koppelnd verbindet, wobei die Verbindungsstege (4) in axialer Sicht zumindest im wesentlichen die Aussenkontur eines radial ausgerichteten und sich tangential einschnürenden (21) "X" haben und radial innen stoffschlüssig und/oder formschlüssig fest mit dem Nabenring (2) verbunden sind,
dadurch **gekennzeichnet,**
daß die Verbindungsstege radial aussen integraler Teil des Elastomerringes (3) und damit über diesen stoffschlüssig und/oder formschlüssig fest mit dem Schwingmassering (1) verbunden sind, und daß radial aussen stoffschlüssig und/oder formschlüssig als Teile des Elastomerringes (3) fest mit dem Schwingmassering (1) verbundene, sich axial erstreckende Pufferstege (5), deren Aussenkontur unter Bildung eines abstandwahrenden engen Trennfugenspalts (16,17,18,19,20) zu den Aussenkonturen sowohl der Verbindungsstege (4) als auch des Mantels des Nabenringes (2) komplementär zu diesen ausgebildet ist, den Zwischenraum zwischen jeweils zwei Verbindungsstegen annähernd ausfüllen.

2. Wellentilger nach Anspruch 1,
dadurch **gekennzeichnet,**
dass die Pufferstege (5) in Umfangsrichtung des Tilgers breiter, insbesondere grössenordnungsmässig doppelt so breit, sind wie die Verbindungsstege (4).

3. Wellentilger nach einem der Ansprüche 1 oder 2,
dadurch **gekennzeichnet,**
dass die Pufferstege (5) axial länger als die Verbindungsstege (4) sind, die ihrerseits axial mittig zu den Pufferstegen angeordnet sind.

4. Wellentilger nach einem der Ansprüche 1 bis 3,
dadurch **gekennzeichnet,**
dass die den Trennfugenspalt (16,17,18,19,20) begrenzenden Trennflächen (6,7,8,9,10,11,12,13,14,14) der Verbindungsstege (4), Pufferstege (5) und Nabenringmantelflächen über den gesamten Verlauf eines jeweils zwischen diesen Flächen gebildeten Trennfugenspalts (16,17,18,19,20) einander äquidistant und streng flächenkomplementär gegenüberstehen.

5. Wellentilger nach einem der Ansprüche 1 bis 3,
dadurch **gekennzeichnet,**
dass die den Trennfugenspalt begrenzenden Trennflächen (6,8,10,11,13,15) im radial äusseren Bereich (16,20) zwischen den Verbindungsstegen und den Pufferstegen sowie (18) zwischen den Pufferstegen und den Nabenringmantelflächen über den Verlauf des jeweils zwischen diesen Flächen gebildeten Abschnittes (16,18,20) des Trennfugenspalts einander äquidistant und streng flächenkomplementär gegenüberstehen, während sie im radial inneren Bereich (17,19) des zwischen den Verbindungsstegen (4) und den Pufferstegen (5) gebildeten Trennfugenspaltes derart geringfügig geneigt gegeneinander verlaufen, dass sich der Trennfugenspalt (19,19) nach radial innen hin verbreitert.

6. Wellentilger nach Anspruch 5,
dadurch **gekennzeichnet,**
dass sich der zwischen den Verbindungsstegen und den Pufferstegen gebildete radial innenliegende Abschnitt (17,19) des Trennfugenspaltes (16,17,18,19,20) von radial aussen nach radial innen auf den Nabenring (2) zu, bezogen auf die Breite des Trennfugenspaltes, um den Faktor 1,1 bis 2,5 verbreitert, und dass der zwischen den Pufferstegen und den Nabenringmantelflächen gebildete Abschnitt (18) des Trennfugenspaltes konstant eine Breite aufweist, die zumindest im wesentlichen gleich der grössten Breite des sich unmittelbar anschliessenden radial inneren Bereichs (17,19) des zwischen den Verbindungsstegen (4) und den Pufferstegen (5) gebildeten Abschnittes des Trennfugenspaltes ist.

7. Verwendung des Wellentilgers nach einem der Ansprüche 1 bis 6 als Gelenkwellentilger im Kraftfahrzeugbau.

## Claims

1. Apparatus for suppressing vibrations of a shaft comprising three concentrical rings, i.e. an outward ring of oscillating mass (1), an inward hub ring (2) and an intermediate segmented elastomer ring (3) connecting the ring of oscillating mass to the hub ring in an axially, radially and tangentially elastically fixed manner by axially extending connecting webs (4), said connecting webs (4) having in an axial projection at least basically the contour of a radially orientated and tangentially necked "X" and being radially inwardly connected to the hub ring (2) in a form-fit and/or material-fit way,
**characterized** in that
the connecting webs are radially outwardly an integral part of the elastomer ring (3) and thus connected by it to the ring of oscillating mass (1) in a material-fit and/or form-fit way, and
that buffer webs (5) connected as parts of the elastomer ring (3) solidly radially outwardly in a form-fit and/or material-fit way to the ring of oscillating mass (1) fill approximately the space between two connecting webs, respectively, the contour of said buffer webs being designed complementarily under formation of distance keeping narrow parting line gaps (16,17,18,19,20) to the contour of the connecting webs (4) as well as to the contour of the convex surface of the hub ring (2).

2. Apparatus for suppressing vibrations of a shaft according to claim 1,
**characterized** in that
the buffer webs (5) are circumferentially wider than the connecting webs (4), in particular about twice as wide as the connecting webs (4).

3. Apparatus for suppressing vibrations of a shaft according to claim 1 or 2,
**characterized** in that
the buffer webs (5) are axially longer than the connection webs (4) orientated for their part axially in the center of the buffer webs (4).

4. Apparatus for suppressing vibrations of a shaft according to one of the claims 1 to 3,
**characterized** in that
the parting planes (6,7,8,9,10,11,12,13,14,15) of the connecting webs (4), the buffer webs (5) and the convex surface of the hub ring (5) limiting the parting line gaps (16,17,18,19,20) are facing each other equidistantly and with a strict convergence of their surfaces over the whole length of a parting line gap (16,17,18,19,20) formed between said parting planes, respectively.

5. Apparatus for suppressing vibrations of a shaft according to one of the claims 1 to 3,
**characterized** in that
the parting planes (6,8,10,11,13,15) in the radially outward region (16,20) between the connecting webs (4) and the buffer webs (5) and (18) between the buffer webs (5) and the convex surfaces of the hub ring as well limiting the parting line gap are facing each other equidistantly and with a strict convergence of their surfaces over the length of the parting line gap's section (16,18,20) formed between said parting planes, respectively,
whereas the parting planes in the radially inward region (17,19) of the parting line gap formed between the connecting webs (4) and the buffer webs (5) are slightly inclined to each other in such a manner, that the parting line gap (17,19) is widening radially inwardly.

6. Apparatus for suppressing vibrations of a shaft according to claim 5,
**characterized** in that
the radially inward section (17,19) of the parting line gap (16,17,18,19,20) formed between the connecting webs and the buffer webs is widening from radially outwardly to radially inwardly towards the hub ring (2) 1,1- to 2,5-fold with reference to the parting line gap's width, and
that the section (18) of the parting line gap (16,17,18,19,20) formed between the buffer webs and the convex surfaces of the hub ring has a width being at least basically of the same size as the maximal width of the immediately adjacent radially inward region (17,19) of the parting line gap's section formed between the connecting webs (4) and the buffer webs (5).

7. Use of the apparatus for suppressing vibrations of a shaft according to one of the claims 1 to 6 in the car manufacture as an apparatus for suppressing vibrations of a universal-joint propeller shaft.

## Revendications

1. Amortisseur d'ondes se composant de trois anneaux concentriques entre eux, à savoir d'un anneau de masse oscillante (1), d'une frette intérieure de roue (2) et d'un anneau central et segmenté d'élastomère (3) qui relie l'anneau de masse oscillante et la frette de roue en les fixant l'un contre l'autre de manière axialement, radialement et tangentiellement élastique et en les couplant l'un à l'autre par l'intermédiaire de traverses de raccordement (4) axiales, les traverses de raccordement (4) possédant, en vue axiale, au moins pour l'essentiel le contour extérieur d'un "X" aligné radialement et qui se resserre tangentiellement et étant assemblées radialement à l'intérieur, par imbrication de leurs différentes matières et/ou mécaniquement, et de façon fixe à la frette de roue (2), caractérisé en ce que les traverses de raccordement sont, radialement et à l'extérieur, partie intégrante de l'anneau d'élastomère (3) et sont donc assemblées par l'intermédiaire de celui-ci, par imbrication de leurs différentes matières et/ou mécaniquement, et de façon fixe à l'anneau de masse oscillante (1) et en ce que des traverses-tampons (5) s'étendant axialement, assemblées radialement et extérieurement, par imbrication de leurs différentes matières et/ou mécaniquement, de façon fixe à l'anneau de masse oscillante (1) en tant que pièces de l'anneau d'élastomère (3) et dont le contour extérieur est conçu de façon complémentaire aux contours extérieurs, aussi bien des traverses de raccordement (4) que de l'enveloppe de la frette de roue (2), par formation d'une £ente de séparation (16, 17, 18, 19, 20) étroite et maintenant un écartement, remplissent approximativement chaque espace intermédiaire entre deux traverses de raccordement.

2. Amortisseur d'ondes selon la revendication 1, caractérisé en ce que les traverses-tampons (5) sont plus larges que les traverses de raccordement (4) dans le sens circonfécirconférentiel de l'amortisseur, et, en particulier, deux fois plus larges en ce qui concerne leur dimension.

3. Amortisseur d'ondes selon l'une des revendications 1 ou 2, caractérisé en ce que les traverses-tampons (5) sont axialement plus longues que les traverses de raccordement (4) qui, pour leur part, sont disposées de façon axialement centrale par rapport aux traverses-tampons.

4. Amortisseur d'ondes selon l'une des revendications 1 à 3, caractérisé en ce que les surfaces de séparation (6, 7, 8, 9, 10, 11, 12, 13, 14, 15) des traverses de raccordement (4), des traverses-tampons (5) et des surfaces de l'enveloppe de la frette de roue, surfaces de séparation limitant la fente de séparation (16, 17, 18, 19, 20), sont placées les unes en face des autres de façon équidistante et strictement complémentaire, au-dessus de l'ensemble de l'étendue d'une fente de séparation formée à chaque fois entre ces surfaces.

5. Amortisseur d'ondes selon l'une des revendications 1 à 3, caractérisé en ce que les surfaces de séparation (6, 8, 10, 11, 13, 15) limitant la fente de séparation sont placées les unes en face des autres de façon équidistante et strictement complémentaire, dans la zone radialement extérieure (16, 20) entre les traverses de raccordement et les traverses-tampons ainsi que, (18), entre les traverses-tampons et les surfaces de l'enveloppe de la frette de roue au-dessus de chaque section de la fente de séparation, section (16, 18, 20) formée entre ces surfaces, tandis que, dans la zone radialement intérieure (17, 19) de la fente de séparation formée entre les traverses de raccordement (4) et les traverses-tampons (5), elles sont opposées et faiblement inclinées de façon à ce que la fente de séparation (19, 19) s'étend radialement à l'intérieur.

6. Amortisseur d'ondes selon la revendication 5, caractérisé en ce que la section (17, 19) de la fente de séparation (16, 27, 18, 19, 20), section formée radialement à l'intérieur, entre les traverses de raccordement et les traverses-tampons, s'étend sur la frette de roue (2), radialement de l'extérieur vers l'intérieur, avec le facteur 1,1 à 2,5, par rapport à la largeur de la fente de séparation, et en ce que la section (18) de la fente de séparation, section formée entre les traverses-tampons et les surfaces de l'enveloppe de la frette de roue, présente de façon constante une largeur qui est, au moins pour l'essentiel, égale à la plus grande largeur de la zone radialement intérieure (17, 19) et se raccordant directement de la section de la fente de séparation, section formée entre les traverses de raccordement (4) et les traverses-tampons (5).

7. Utilisation de l'amortisseur d'ondes dans la construction automobile, selon l'une des revendications 1 à 6, en tant qu'amortisseur d'ondes articulé.
